## Europäisches Patentamt
## European Patent Office
## Office européen des brevets

(19)

(11) Numéro de publication: **0 193 468**
**B1**

(12)

# FASCICULE DE BREVET EUROPÉEN

(45) Date de publication du fascicule du brevet: **31.08.88**

(51) Int. Cl.⁴: **E 01 H 1/10,** A 01 C 3/04

(21) Numéro de dépôt: **86400401.5**

(22) Date de dépôt: **25.02.86**

(54) **Dispositif adaptable sur véhicule pousseur, pour le déblaiement et le chargement d'objets tels que détritus, se trouvant sur le sol.**

(30) Priorité: **27.02.85 FR 8502868**

(43) Date de publication de la demande:
**03.09.86 Bulletin 86/36**

(45) Mention de la délivrance du brevet:
**31.08.88 Bulletin 88/35**

(84) Etats contractants désignés:
**AT BE CH DE FR GB IT LI LU NL SE**

(56) Documents cité:
**EP-A-0 097 743**
**US-A-4 306 362**

(73) Titulaire: **Boutrais, Jacques, 23, Passage Dubail, F-75010 Paris (FR)**
Titulaire: **Charraire, Bernard, 31, Allée du Muguet, F-77490 Chelles les Coudreaux (FR)**

(72) Inventeur: **Boutrais, Jacques, 23, Passage Dubail, F-75010 Paris (FR)**
Inventeur: **Charraire, Bernard, 31, Allée du Muguet, F-77490 Chelles les Coudreaux (FR)**

(74) Mandataire: **Armengaud Ainé, Alain, Cabinet ARMENGAUD AINE 3 Avenue Bugeaud, F-75116 Paris (FR)**

EP 0 193 468 B1

### Description

La présente invention concerne un dispositif adaptable sur véhicule pousseur, destiné à collecter en vue de leur ramassage et éventuellement de leur chargement, des objets se trouvant sur le sol. Ce dispositif est plus particulièrement, mais bien entendu non exclusivement, appelé à être utilisé pour le nettoyage des détritus de voierie, de marchés, de dépôt-relais, etc... Cette liste d'utilisations n'étant évidemment pas limitative.

Actuellement ce ramassage est effectué manuellement, à l'aide d'outils rudimentaires et au prix d'un travail long, pénible et coûteux.

Le dispositif suivant l'invention permet d'effectuer cette opération dans des conditions optimales de rapidicé, de facilité et d'efficacité.

Ce dispositif, adapte sur un véhicule pousseur et comportant, comme il est connu du document US-A-4 306 362, une paroi arrière fixe sensiblement verticale sur laquelle sont articulées des parois latérales est caractérisé en ce que la paroi arrière est munie à sa partie inférieure, de moyens, effaçables, formant fond relevable pour la collecte des détritus, leur transport et éventuellement leur élévation.

La paroi arrière du dispositif est reliée au véhicule pousseur par un système comportant des moyens amortisseurs assurant d'une part la suspension du dispositif pendant ses déplacements, d'autre part l'application constante sur le sol de la base de la paroi arrière en position de travail, quelles que soient les dénivellations du sol.

Le système amortisseur est constitué par un cadre-support susceptible d'être attelé au véhicule pousseur et monté de façon à pouvoir coulisser à l'encontre de ressorts sur des tiges ou barres solidaires de la paroi arrière, entre une butée haute et une butée basse que comportent ces tiges, ces butées limitant le déplacement du cadre-support et les ressorts étant comprimés entre les butées hautes des tiges ou barres et la partie haute correspondante du cadre-support.

Sur la paroi arrière est monté un fond, rétracté pendant la phase de poussage des objets tels que détritus et déployé une fois ces objets enserrés entre la paroi arrière et les parois latérales du dispositif, en vue de leur ramassage.

Le fond rétractable présente une surface continue ou non, telle que châssis à lames, soumise à l'action de moyens tels que vérins et susceptible d'occuper deux positions l'une voisine de la verticale, pendant que s'effectue le poussage des objets, l'autre, horizontale, pour supporter les objets en vue de leur transport et éventuellement de leur élévation.

Les lames du châssis sont montées sur des tiges ou barres, parallèles, soumises à l'action de moyens tels que vérins, ces tiges ou barres étant elles-mêmes montées sur des pièces munies de moyens permettant le passage du châssis de la position verticale, effacée, à la position horizontale de ce dernier.

Les divers caractéristiques et avantages de l'invention ressortiront de la description qui va suivre de quelques formes possibles de réalisation. Il est bien précisé qu'il s'agit uniquement d'exemples non limitatifs et que toutes autres dispositions pourraient être adoptées sans sortie du cadre de l'invention.

Au cours de cette description on se réfère aux dessins ci-joints sur lesquels:

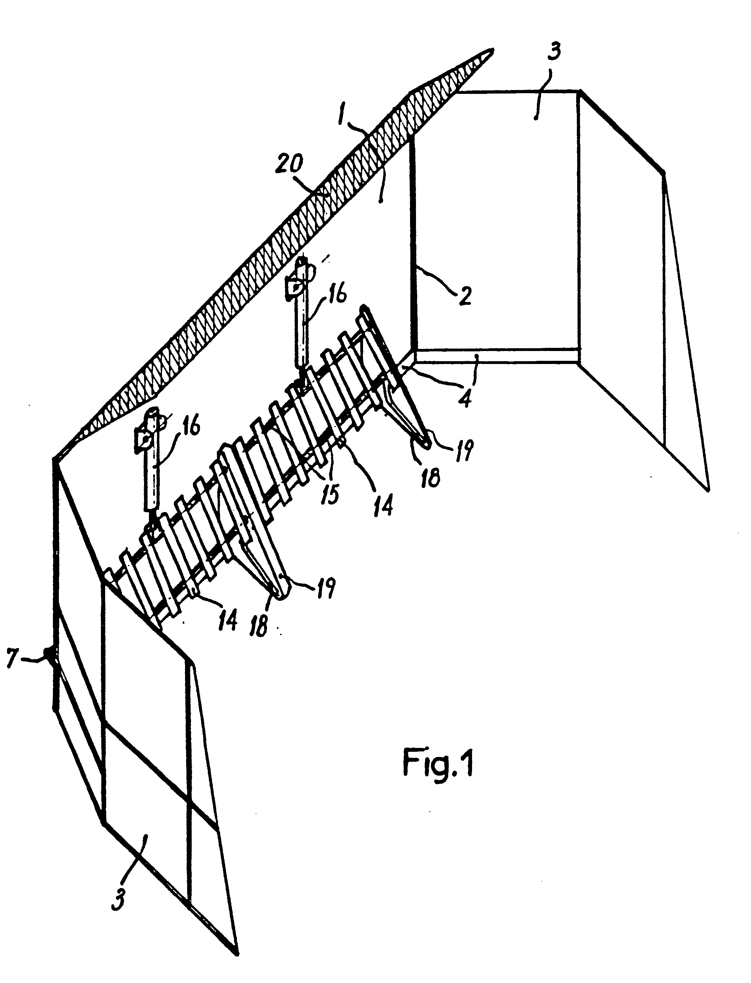

la Fig.1　　est une vue en perspective de 3/4 avant d'undispositif suivant l'invention,

la Fig. 2　　est une vue, analogue à la Fig. 1 mais de 3/4 arrière, d'un tel dispositif,

la Fig. 3　　est une vue de dessus du dispositif en position ouverte des parois latérales, le fond rétracté,

la Fig. 4　　est une vue de dessus du dispositif en position fermée des parois latérales et le fond déployé,

la Fig. 5　　est une vue en coupe suivant A-A' de la Fig. 3, et

la Fig. 6　　est une vue en coupe suivant B-B' de la Fig. 4.

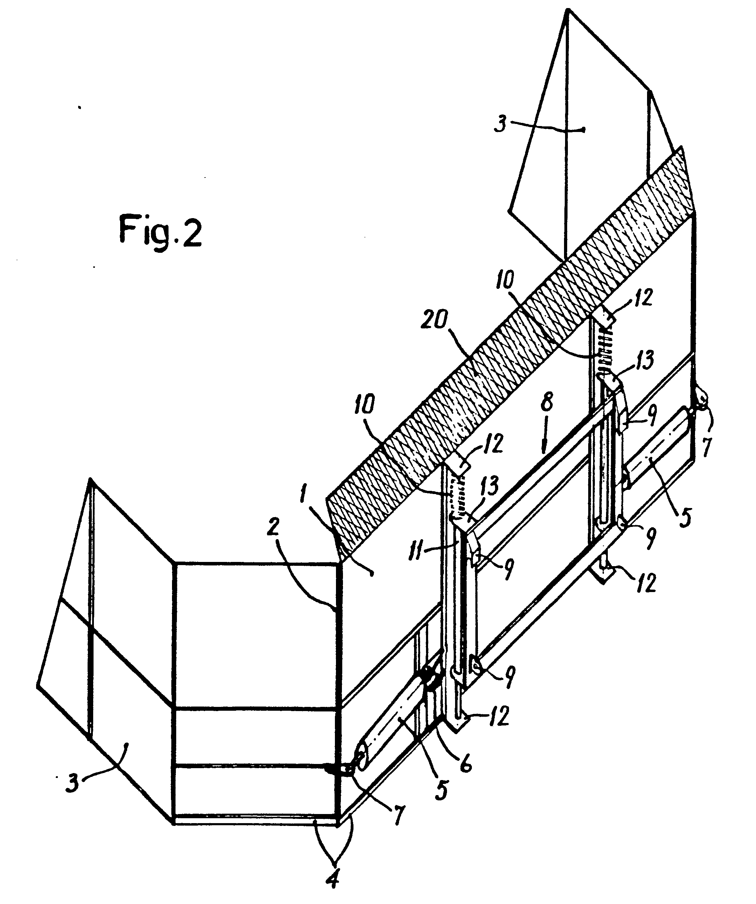

Dans l'exemple traité, le dispositif comporte une paroi arrière sensiblement verticale 1, adaptable sur un véhicule pousseur et sur laquelle sont articulées, par des charnières 2, des parois latérales 3. Sous ces parois latérales, aussi bien que sous la paroi arrière 1, sont prévues des bavettes 4, permettant le raclage du sol du dispositif lors de sa poussée. Avantageusement, ces bavettes sont montées sur les parois qu'elles équipent de façon à se déplacer dans le plan vertical pour leur permettre d'épouser les inégalités du sol. Ce montage peut par exemple être réalisé au moyen d'une tige solidaire de la bavette et fixée sur la paroi intéressée, entourée d'un ressort comprimé entre une butée et la bavette elle-même et sollicitant cette dernière vers le sol. Sur les parois latérales 3 agissent (voir Fig 2) des vérins 5 pour assurer la rotation de ces parois sur la paroi arrière 1. Ces vérins sont montés, d'une part sur une chape 6 solidaire de la paroi 1, d'autre part sur une chape 7, solidaire de la paroi latérale concernée, servant de butée aux parois latérales en position ouverte du dispositif.

Le dispositif est relié au véhicule pousseur par un système que l'on voit plus particulièrement sur la Fig. 2. Ce système consiste en un cadre 8 comportant des points 9 d'attelage haut et bas adaptés en fonction des porte-outils du véhicule pousseur et qui est monté, de façon à pouvoir coulisser, à l'encontre de ressorts 10, sur des tiges 11, rendues solidaires de la paroi arrière 1 et comportant, à chacune de leurs extrémités, une butée 12 limitant la course du cadre 8. Les ressorts 10 sont maintenus entre les butées supérieures des tiges et des appuis 13 prévus sur le cadre 8.

Ces dispositions, suivant l'invention, assurent d'une part la suspension élastique du dispositif pendant ses déplacements, d'autre part l'application constante sur le sol de la base de la paroi arrière en position de travail, quelles qu'en soient les dénivellations.

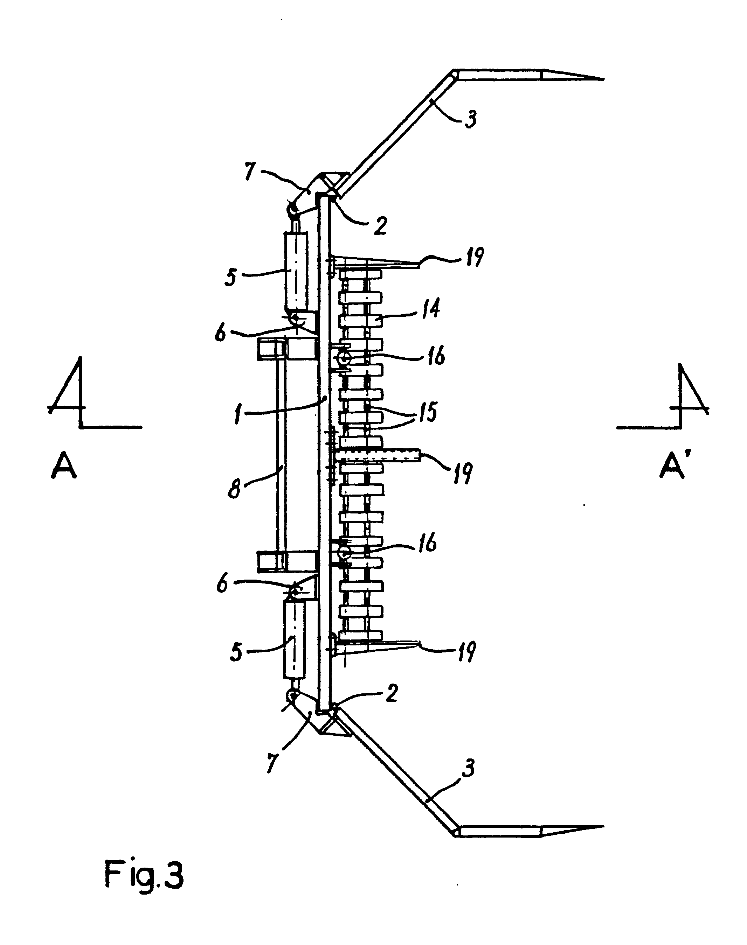

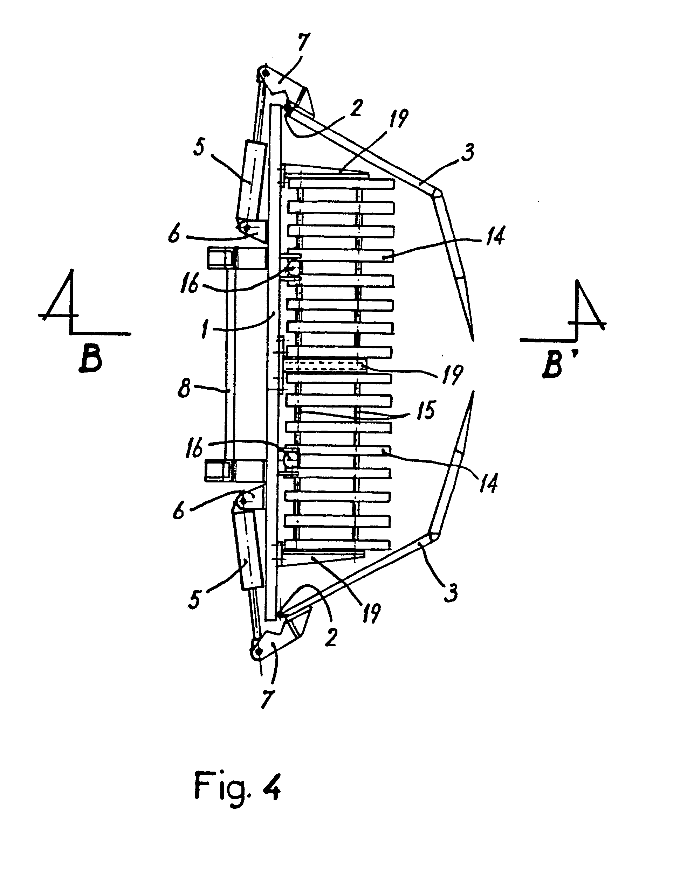

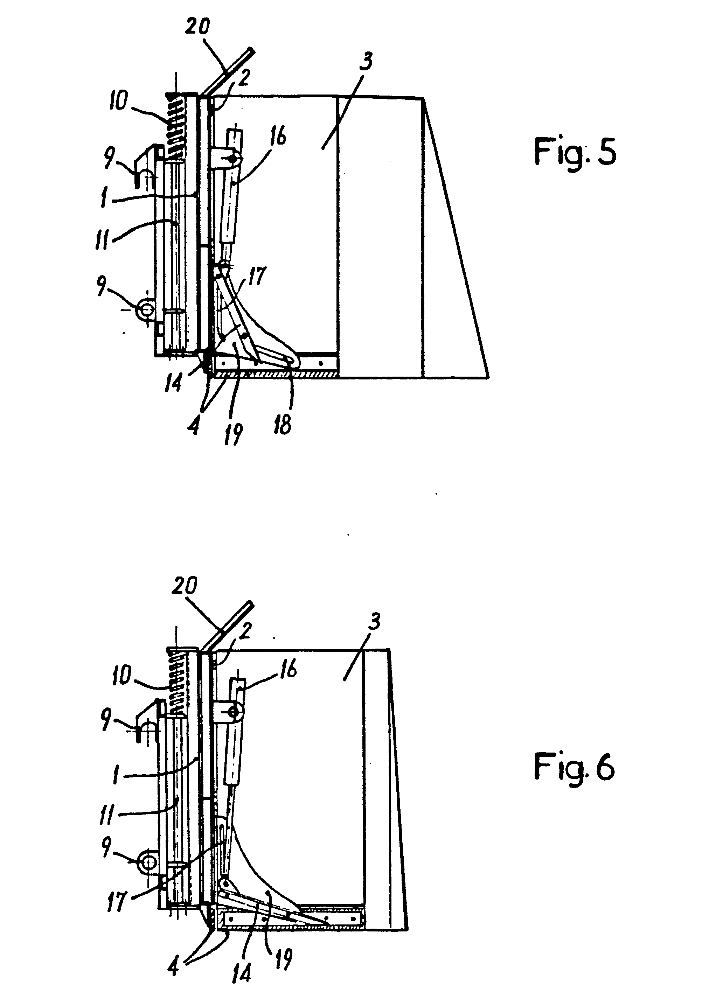

Le dispositif est muni, suivant l'invention, d'un fond à surface continue, ou non. Dans la forme de réalisation représentée aux Fig. 3 à 6, ce fond est constitué par des lames 14 montées sur des tiges, barres ou l'équivalent 15.

Pour que le fond puisse occuper deux positions une position rétractée, voisine de la verticale, comme le montre la Fig. 3, aussi bien pendant les déplacements du dispositif que pendant l'opération de ramassage des objets, pour éviter de les pousser hors de sa zone d'action, et une position déployée voisine de l'horizontale, une fois effectué le ramassage des objets, les tiges. 15 sont actionnées par des vérins 16 fixés sur la face antérieure de la paroi arrière 1 et leurs extrémités passent dans des rainures de cames 17, 18, que présentent des pièces 19 solidaires également de la paroi arrière 1.

La rainure haute 17 est de direction voisine de la verticale, la rainure basse 18 de l'horizontale, légèrement inclinée.

Ainsi est réalisée, suivant l'invention, la mise dans les deux positions voulues, du fond du dispositif, observation étant faite que, comme signalé plus haut, le passage de la position rétractée du fond à la position horizontale ne se fait qu'une fois terminée l'opération de collecte des objets pour éviter une poussée intempestive des objets par le fond amené prématurément à la position horizontale déployée.

Une grille de protection 20 inclinée vers l'avant du dispositif est montée sur toute la largeur de la paroi, cette grille servant d'anti-retour lorsque les objets, détritus ou autres, sont emprisonnés entre les parois latérales en position fermée.

Ces parois peuvent affecter diverses formes. Elles peuvent, comme dans l'exemple traité, être pliées sensiblement en leur milieu de façon à intercepter un angle d'environ 135°, afin que leurs extrémités soient sensiblement perpendiculaires à la paroi 1 en position ouverte et sensiblement parallèles à cette même paroi en position fermée afin de précomprimer les détritus et de les emprisonner.

Cependant ces parois peuvent également être de forme générale courbe, suivant toute courbure voulue.

Quant à la paroi arrière 1, elle peut être de forme courbe pour présenter dans sa partie basse un angle d'attaque efficace et elle est munie de joues à angle droit sur lesquelles sont fixées les charnières des parois latérales et pratiquées, dans leur partie inférieure, les rainures de came 17 et 18. Sur leur partie supérieure sont fixés les vérins 16, ces vérins étant alors externes.

L'ensemble du système hydraulique équipant le dispositif est à double effet mais l'on peut utiliser des limiteurs de pression au retour des vérins actionnant les parois latérales et à l'entrée des vérins actionnant le fond rétractable, afin de permettre un mouvement successif des parois latérales et du fond par rapport à la paroi arrière ou inversement suivant le résultat recherché, savoir dans un premier temps fermer les parois latérales et déployer le fond, dans un deuxième temps rétracter le fond et ouvrir les parois latérales.

D'une façon générale l'invention peut donner lieu à de nombreuses variantes sans que, ce faisant, on sorte de son cadre.

C'est ainsi, par exemple, que les vérins de commande du fond rétractable peuvent être fixés sur la face postérieure de la paroi arrière, ce qui entraîne une modification du dispositif d'accouplement au véhicule pousseur ou une modification du dessin de la paroi arrière, ainsi qu'on l'a fait remarquer plus haut.

Quant aux limiteurs de pression auxquels on a fait allusion plus haut, ils sont inutiles si les mouvements du fond et ceux des parois latérales sont commandés de façon indépendante par asservissement hydraulique au moyen d'une fonction double effet s'appliquant à chacun de ces organes.

## Revendications

1. Dispositif adaptable sur véhicule pousseur pour le déblaiement, le ramassage en vue de leur évacuation et de leur chargement éventuel d'objets tels que détritus se trouvant sur le sol, comportant une paroi arrière (1) fixe, sensiblement verticale, sur laquelle sont articulées des parois latérales (3) caractérisé en ce que la paroi arrière est munie, à sa partie inférieure de moyens (14, 15), effaçables, formant fond relevable pour la collecte des objets, leur transport et éventuellement leur élévation.

2. Dispositif suivant la revendication 1, caractérisé en ce que sous les parois latérales (3) aussi bien que sous la paroi arrière (1) sont prévues des bavettes (4), montées sur les parois qu'elles équipent de façon à se déplacer dans le plan vertical pour leur permettre d'épouser les inégalités du sol.

3. Dipositif suivant l'une quelconque des revendications précédentes, caractérisé en ce que la paroi arrière (1) est reliée au véhicule pousseur par un système comportant des moyens amortisseurs assurant d'une part la suspension du dispositif pendant ses déplacements, d'autre part l'application constante de la base de la paroi arrière en position de travail, quelles que soient les dénivellations du sol.

4. Dispositif suivant la revendication 3, caractérisé en ce que le système amortisseur est constitué par un cadre-support (8) susceptible d'être attelé au véhicule pousseur et monté de façon à pouvoir coulisser à l'encontre de moyens amortisseurs tels que ressorts (10) sur des moyens tels que tiges (11) solidaires de la paroi arrière (1) entre une butée haute et une butée basse (12) que comportent ces tiges.

5. Dispositif suivant l'une quelconque des revendications 3 et 4, caractérisé en ce que les moyens amortisseurs tels que ressorts (10) sont disposés entre les butées supérieures (12) des tiges (11) et des appuis (13) prévus sur le cadre (8).

6. Dispositif suivant l'une quelconque des revendications précédentes, caractérisé en ce que le fond relevable présente une surface continue, ou non, soumise à l'action de moyens tels que vérins et susceptible d'occuper deux positions l'une voisine de la verticale pendant que s'effectue la poussée exercée sur les objets, l'autre horizontale pour supporter les objets en vue de leur transport et éventuellement de leur élévation.

7. Dispositif suivant la revendication 6, caractérisé en ce que le fond est constitué par des lames (14) montées sur des tiges ou barres (15) actionnées par des vérins (16) fixés sur la face antérieure de la paroi arrière (1) et dont les extrémités passent dans des rainures de came (17, 18) que présentent des pièces (19) solidaires de la paroi arrière (1) l'une des rainures (17) étant de direction voisine de la verticale, l'autre rainure (18) voisine de l'horizontale.

8. Dispositif suivant l'une quelconque des revendications précédentes, caractérisé en ce que les parois latérales (3) sont montées au moyen de charnières (2) sur la paroi arrière (1) et sont pliées sensiblement en leur milieu de façon à intercepter un angle d'environ 135° afin que leurs extrémités soient sensiblement perpendiculaires à la paroi arrière (1) en position ouverte, et sensiblement parallèles à cette même paroi en position fermée afin de précomprimer les objets et de les emprisonner.

9. Dispositif suivant l'une quelconque des revendications précédentes, caractérisé en ce que les moyens d'actionnement tels que vérins du fond relevable sont disposés sur la face postérieure de la paroi arrière fixe (1).

10. Dispositif suivant l'une quelconque des revendications précédentes, caractérisé en ce que la paroi arrière (1) est de forme courbe, munie de joues à angle droit sur lesquelles sont fixées les charnières (2) des parois latérales (3) et pratiquées, dans leur partie inférieure, les rainures de came (17, 18) et dont la partie supérieure porte les vérins (16).

## Claims

1. Vorrichtung für ein schiebendes Fahrzeug zum Räumen, Einsammeln, Beseitigen und Laden von sich auf den Boden befindlichen Gegenständen, beispielsweise Abfällen, die eine feste, im wesentlichen vertikale Rückwand (1) aufweist, an der Seitenwände (3) gelenkig angebracht sind, gekennzeichnet durch abstellbare Hilfsmittel (14, 15) an ihrer Unterseite, die einen hochklappbaren Boden zum Aufsammeln, Transport, sowie zum Aufheben von Gegenständen bilden.

2. Vorrichtung nach Anspruch 1, dadurch gekennzeichnet daß sowohl die Seitenwände (3) wie auch die Rückwand (1) Schmutzfänger (4) aufweisen, die an den Wänden so befestigt sind, daß sie sich vertikal verschieben können, um sich den Unebenheiten des Bodens anzupassen.

3. Vorrichtung nach Anspruch 1 oder 2, dadurch gekennzeichnet, daß die Rückwand (1) mit einem Befestigungssystem am schiebenden Fahrzeug angebracht ist, das eine Dämpfungsvorrichtung aufweist, die einerseits die Aufhängung der Vorrichtung in Hochstellung übernimmt und andererseits ein gleichmäßiges Anliegen des Bodenabschnittes der Rückwand in Arbeitsposition unabhängig von den Unebenheiten des Untergrundes gewährleistet.

4. Vorrichtung nach Anspruch 3, dadurch gekennzeichnet, daß die Dämpfungsvorrichtung durch einen Stützrahmen (8) gebildet wird, der am schiebenden Fahrzeug angekuppelt und so befestigt werden kann, daß er gegen die Dämpfer, beispielsweise Federn (10), auf Führungsstangen (11), die mit der Rückwand (1), fest verbunden sind, zwischen einem auf den Führungsstangen angebrachten oberen und einem unteren Anschlag (12) verschoben werden kann.

5. Vorrichtung nach Anspruch 3 oder 4, dadurch gekennzeichnet, daß die beispielsweise aus Federn (10) bestehende Dämpfungsvorrichtung zwischen den oberen Anschlägen (12) der Führungsstangen (11) und Anschlagflächen (13) am Rahmen (8) angeordnet ist.

6. Vorrichtung nach einem der Ansprüche 1 bis 5, dadurch gekennzeichnet, daß der abhebbare Boden eine gleichmäßige oder unterbrochene Oberfläche aufweist, die beispielsweise durch Hydraulikzylinder bewegt wird und zwei Stellungen einnehmen kann: eine erste, annähernd vertikale Stellung während beim Schieben Druck auf die Gegenstände ausgeübt wird, und eine zweite horizontale Stellung zur Aufnahme der Gegenstände für ihren Transport und ein mögliches Aufheben.

7. Vorrichtung nach Anspruch 6, dadurch gekennzeichnet daß der Boden durch lamellenartige Zacken (14) gebildet wird, die auf Stangen oder Querträgern (15) befestigt sind, die wiederum durch beispielsweise Hydraulikzylinder (16) betätigt werden, die an der Vorderseite der Rückwand (1) angebracht sind und deren äußere, bewegliche Teile in Führungsnuten (17, 18) in Platten (19), die fest an der Rückwand (1) befestigt sind, laufen, wobei eine der Führungsnuten (17) im wesentlichen vertikal und die andere der Führungsnuten (18) im wesentlichen horizontal verläuft.

8. Vorrichtung nach einem der Ansprüche 1 bis 7, dadurch gekennzeichnet daß die Seitenwände (3) über scharnierartige Gelenke (2) an der Rückwand (1) befestigt und im wesentlichen mittig um einen Winkel von ungefähr 135° gebogen sind, so daß in geöffneter Stellung ihre äußeren Abschnitte ungefähr senkrecht zur Rückwand (1) und in geschlossener Stellung

ungefähr parallel zur Rückwand, in die Gegenstände vor zu verfestigen und einzuschließen, ausgerichtet sind.

9. Vorrichtung nach einem der Ansprüche 1 bis 8, dadurch gekennzeichnet, daß die Stellantriebe, wie beispielsweise Hydraulikzylinder, für den abhebbaren Boden an der Rückseite der starren Rückwand (1) angebracht sind.

10. Vorrichtung nach einem der Ansprüche 1 bis 9, dadurch gekennzeichnet, daß die Rückwand (1) gekrümmt ausgeführt ist und rechtwinkelige Seitenflansche aufweist, an denen die scharnierartigen Gelenke (2) der Seitenwände (3) befestigt sind und die in ihrem unteren Teil die Führungsnuten (17, 18) und an ihrem oberen Teil die Stellzylinder (16) tragen.

## Claims

1. Apparatus or a scavenging vehicle for collecting objects such as detritus lying on the ground, for gathering the objects together for removal, and for their subsequent loading, the apparatus comprising a fixed, substantially vertical rear wall (1), on which a plurality of lateral screens (3) are articulated, characterised in that the rear wall is provided in its lower part with retractable means (14, 15) constituting a carrier, adapted to be raised, for the collection, transport and then elevation of the objects.

2. Apparatus according to Claim 1, characterised in that sweeping members (4) are provided below the lateral screens (3) and also below the rear wall (1), the sweeping members being mounted on the corresponding screens or wall in such a way as to be displaceable in a vertical plane so as to allow them to accommodate variations in ground contours.

3. Apparatus according to either one of the preceding Claims, characterised in that the rear wall (1) is attached to the scavenging vehicle by a system comprising damper means for ensuring on the one hand that the apparatus is suspended during its movements, and on the other hand that the carrier of the rear wall is constantly maintained in a working position, whatever variations in level may exist on the ground.

4. Apparatus according to Claim 3, characterised in that the damping system comprises a support frame (8) adapted for being coupled to the scavenging vehicle and mounted in such a way as to be able to slide in response to the action of damper means such as springs (10), arranged on means such as guide means (11) fixed to the rear wall (1) between an uper end stop and a lower end stop (12) which form part of the said guide members.

5. Apparatus according to either one of Claims 3 and 4, characterised in that the damper means such as springs (10) are disposed between the upper end stops (12) of the guide members (11) and abutments (13) provided on the frame (8).

6. Apparatus according to any one of the preceding Claims, characterided in that the raisable carrier has a continuous surface or otherwise, which is subjected to the action of means such as actuators and which is adapted to assume two positions: one of said positions being approximately vertical while the objects are being pushed, the other of said positions being horizontal so as to support the objects whereby to transport them and subsequently to elevate them.

7. Apparatus according to Claim 6, characterised in that the carrier comprises slates (14), mounted on rails or bars (15) which are operated by actuators (16) fixed on the front face of the rear wall (1), with the ends of the actuators extending through camming slots (17, 18) formed in members (19) fixed to the rear wall (1), one of the slots (17) extending in an approximately vertical direction and the other slot (18) extending in an approximately horizontal direction.

8. Apparatus according to any one of the preceding Claims, characterised in that the lateral screens (3) are mounted by means of hinges (2) on the rear wall (1), and are bent, substantially down the middle, in such a way as to subtend an angle of about 135°, so that their free ends are substantially prependicular to the rear wall (1) when in the open position, and substiantially parallel to the said wall when in the closed position, whereby first to compress and then to trap the objects.

9. Apparatus according to any one of the preceding Claims, characterised in that the actuating means, such as actuators, for the raisable carrier are disposed on the posterior face of the fixed rear wall (1).

10. Apparatus according to any one of the preceding claims, characterised in that the rear wall (1) is of curved shape, but is provided with rectilinear portions, on which the hinges (2) for the lateral screens (3) are fixed, and also having in their lower part the camming slots (17, 18), the actuators (16) being carried by the upper part of the said portions.

Fig.1

# Fig.2

Fig.3

Fig. 4

Fig. 5

Fig. 6